Europäisches Patentamt

European Patent Office

Office européen des brevets

(19)

(11) Publication number: **0 059 106**
**B1**

# EUROPEAN PATENT SPECIFICATION

(12)

(45) Date of publication of patent specification: **10.06.87**

(51) Int. Cl.⁴: **C 08 F 6/06, B 01 D 3/06**

(21) Application number: **82300927.9**

(22) Date of filing: **23.02.82**

(54) Process for the separation treatment of polymer from polymer solution.

(30) Priority: **23.02.81 JP 25753/81**
**25.05.81 JP 79872/81**
**02.06.81 JP 85111/81**

(43) Date of publication of application:
**01.09.82 Bulletin 82/35**

(45) Publication of the grant of the patent:
**10.06.87 Bulletin 87/24**

(84) Designated Contracting States:
**DE FR GB IT NL**

(56) References cited:
**FR-A-1 515 825**
**GB-A- 991 856**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Takao, Hiroyoshi**
**7-16, Kurosunadai 3 chome**
**Chiba-shi (JP)**
Inventor: **Inoue, Yoshio**
**832-4, Shiizu**
**Ichihara-shi (JP)**
Inventor: **Yamazaki, Hirotami**
**9, Yushudainishi-1-chome**
**Ichihara-shi (JP)**

(74) Representative: **Tubby, David George et al**
**MARKS & CLERK 57-60 Lincoln's Inn Fields**
**London WC2A 3LS (GB)**

Courier Press, Leamington Spa, England.

## Description

The present invention relates to a process for separating polymer from a polymer solution.

It is particularly valuable for recovering polymers, which may be ethylene-α-olefin binary copolymers, ethylene-α-olefin-nonconjugated polyene ternary copolymers or other polymers, produced by the polymerization process known as "solution polymerization", from their polymerization solutions, by removing the solvent (which can include some residual monomer; hereinafter, references to removal of the solvent should be taken to include the possible removal also of residual monomer), such as the conventionally used hydrocarbon solvents.

In general, when producing polymers by solution polymerization, apparatus is employed for removing the solvent from the polymer solution formed in the polymerization reactor, and various types of apparatus have been proposed.

For example, when producing thermoplastic substances, one process comprises heating the polymer mixture by means of various indirect heat exchangers and flash-evaporating the solvent in a vessel by utilizing the sensible heat of the polymer mixture. However, this process has the disadvantage that the polymer is usually highly viscous in the liquid state and highly adhesive or sticky in the powdery or granular state; as a result, the polymer adheres to the wall of the flashing vessel, which makes it difficult to discharge. Either, therefore, it is necessary to provide a mechanical discharge device in order to maintain stable operation, or the flashing vessel can only be used for preliminary condensation and the polymer solution cannot be concentrated beyond a relatively low value (for example 50% by weight).

We have now discovered a process for concentrating a polymer solution which overcomes this disadvantage.

Accordingly, the present invention consists of a process for concentrating a polymer solution by flashing said polymer solution, characterized in that said polymer solution is heated under an elevated pressure sufficient to maintain said solution in a liquid state and is sent into a flashing tank kept at an inner surface temperature of at least 140°C and at a pressure ranging from atmospheric pressure to 5 kg/cm² G, and said solution is flashed to evaporate and separate the solvent, thereby concentrating said solution, so that the concentration of the polymer in the solution becomes at least 80% by weight, the concentrated solution being recovered from the bottom part of the flashing tank.

In a preferred embodiment of the invention, the polymer and solvent vapour after flashing are fed into the flashing tank via a flashed product duct whose inner surface is maintained at a temperature of at least 140°C. This temperature may be maintained by, for example, providing a heating jacket outside the flashed product duct. The flashed product duct is preferably so shaped that it may be inserted into the flashing tank through the side wall of the flashing tank and bent towards the bottom of the flashing tank with a radius of curvature such that sufficient capacity can be secured in the upper part of the flashing tank. The length of the flashed product duct is preferably shorter than would be the length of a duct inserted through the top of the flashing tank and extending vertically downwards, as a result of which polymer and solvent vapour can be supplied to the flashing tank smoothly and stably without adhesion or attachment of polymer to the inner wall of the flashed product duct, and the solvent vapour and polymer can be smoothly and stably separated and recovered in the flashing tank.

In a further feature of the present invention, when flashing the polymer solution to separate and recover polymer therefrom, the flashed product duct is formed by an enlarged profile pipe of which the inner surface temperature is maintained at 140°C or above and is used to feed the polymer and solvent vapour after flashing to the flashing tank; the required inner surface temperature may be achieved by providing a heating jacket on the outside of this pipe. Preferably, the flashing tank is formed by a cyclone having an inner surface temperature of 140°C or above and the pressure in this cyclone is kept in the range from atmospheric pressure to 5 kg/cm² G.

The present invention enables a polymer solution concentrated to at least 80% by weight or more to be obtained effectively and easily from a polymer solution having a relatively low polymer concentration.

The process of the present invention can be used to separate and recover polymer from solutions of polymers produced by the solution polymerization process. In particular, the invention may be applied to the recovery of polymers from solutions of ethylene-α-olefin binary copolymers, ethylene-α-olefin-nonconjugated polyene terpolymers (these copolymers and terpolymers hereinafter being referred to generically as "EP copolymers"), polybutadiene rubber and styrene-butadiene copolymer rubbers (SBR and modified SBR).

The invention is further illustrated by the accompanying drawings, in which:

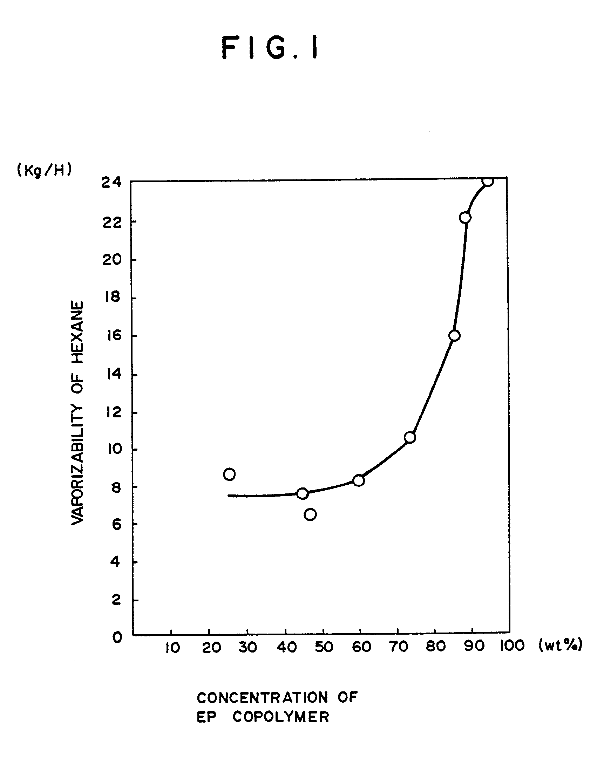

Figure 1 illustrates the relationship between the concentration of EP copolymer and the amount of vapourized hexane in the following Referential Example:

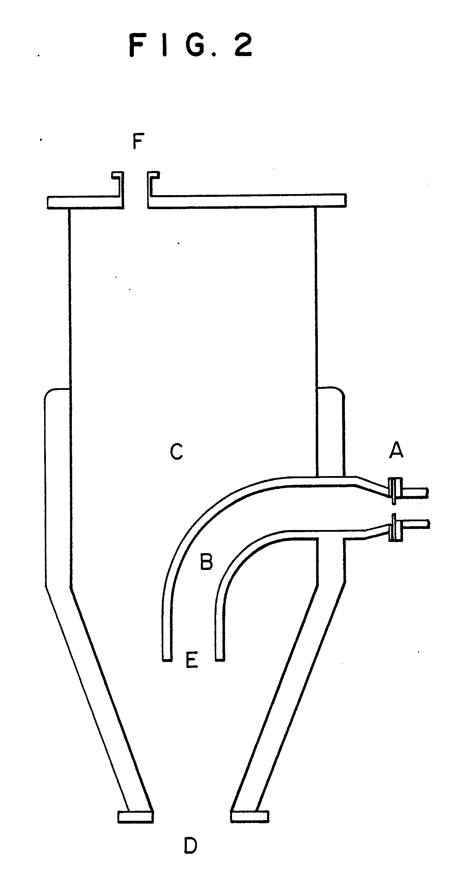

Figure 2 shows a transverse sectional view of the flashed product duct and flashing tank used in an embodiment of the present invention, in which A is the flashing hole, B is the flashed product duct, C is the flashing tank, D is the polymer outlet, E is the downstream end of the flashed product duct and F is the vapour outlet of the flashing tank C;

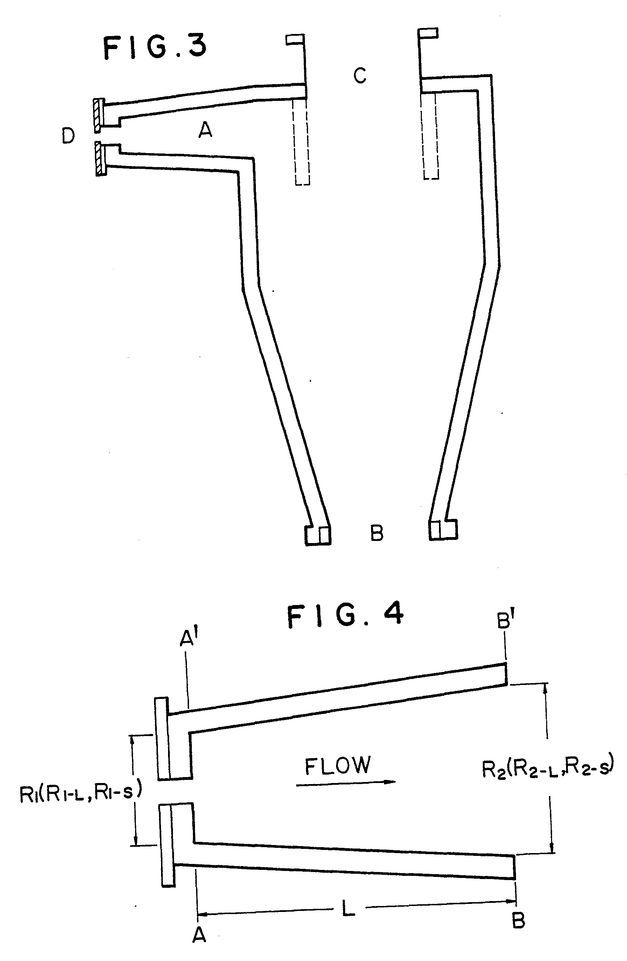

Figure 3 is a schematic transverse sectional view of another embodiment of apparatus for use in the present invention, in which A is an enlarged profile pipe, B is a polymer discharge hole, C is a solvent vapour discharge hole and D is the flashing hole;

Figure 4 is a schematic view of the enlarged profile pipe which may be employed in one embodiment of the apparatus of the invention, in which $R_1$ is the diameter of section A—A' (provided that the greater diameter is $R_{1-L}$ and the smaller diameter is $R_{1-s}$), $R_2$ is the diameter of section B—B' (provided that the greater diameter is $R_{2-L}$ and the lesser diameter is $R_{2-s}$), and L is the length of the enlarged profile pipe, measured along the direction of flow in the pipe.

The invention will be explained in more detail, referring primarily to the use of EP copolymers.

EP copolymers can be obtained by polymerizing ethylene, an α-olefin and optionally a nonconjugated diene with a Ziegler catalyst in a $C_5$—$C_{10}$ hydrocarbon solvent, particularly hexane or heptane. Optionally the polymer solution leaving the polymerization reactor (whose concentration is usually, in the case of EP copolymers, from 3 to 15% by weight) is filtered or washed with water, an acid or an alkali and then heated. The heating is generally carried out under a sufficiently elevated pressure to maintain the polymerization solvent in a liquid state; specifically, the pressure is higher than the equilibrium pressure between solvent and vapour at the temperature in any part of the heater. If this pressure is not maintained, the solvent vapourizes in the heater and the polymer content rises locally in the pipes of the heater or heat-exchanger, resulting in clogging of the pipes, which is undesirable.

At this time, the amount of heat which should be supplied to the solution can easily be calculated from the initial polymer concentration of the solution and the polymer concentration of the recovered solution. Preferably, however, it is sufficient to vapourize substantially the whole of the solvent when the solution is flashed.

The solution, which has been heated under elevated pressure in the heater, is then flashed and introduced into a flashing tank through a flashed product duct, which is connected, without a valve, to the flashing tank. The tank is maintained at atmospheric pressure or a chosen elevated pressure and it is in this tank that the solution is separated into polymer and solvent vapour.

In accordance with the invention, discharge of the concentrated polymer solution from the flashing tank is eased by ensuring that the pressure within the flashing tank is in the range from 0 to 5 kg/cm² G, preferably from 1 to 2 kg/cm² G. Since any elevation of the pressure within the flashing tank increases the heat required to achieve the desired concentration of the polymer solution, it is particularly economical and desirable to ensure that the pressure within the tank is no more than 1—2 kg/cm² G, which may be achieved, for example, by providing a sufficiently large outlet hole in the tank for the concentrated polymer solution.

We prefer to provide a heating jacket or some other heating means on the outside of the flashed product duct and of the flashing tank, to ensure that the temperature of the inner wall surface (hereinafter referred to as the "skin") of the flashed product duct and of the flashing tank are maintained above 140°C, more preferably above 180°C. This enables a solution having a polymer content of 80% by weight or more to be discharged easily from the flashing tank through the flashed product duct and ensures that the polymer has enhanced fluidity without adhesion to the walls of the flashed product duct and the flashing tank. If the skin temperatures of the flashed product duct and the flashing tank are lower than 140°C, the highly concentrated polymer solution is highly adhesive and sticky, which is undesirable.

On the other hand, if the skin temperatures exceed the preferred range, the quality of the polymer can be injured by degradation or gelation; this can take place, in the case of an EP copolymer, at a skin temperature of 250°C. We therefore prefer to ensure that the skin temperatures of the flashed product duct and of the flashing tank do not exceed 240°C.

The parts of the flashed product duct and flashing tank whose skin temperatures should be maintained at least at 140°C, preferably at least 180°C, are those zones which come into contact with the concentrated solution. Specifically, for the flashed product duct, this includes its inner skin as well as the outer skin of that part of the duct within the flashing tank. The temperature of the inner wall of the upper part of the flashing tank may, however, be only a little higher than the boiling point of the solvent at the pressure within the tank, so that the solvent vapour which has been flashed off from the solution does not condense.

The advantages of the invention can be exhibited effectively when this invention is applied to the concentration of polymer solutions produced by the solution polymerization process and this effect is particularly pronounced in the case of EP polymer solutions. In the case of EP polymer solutions, the concentration of the EP copolymer in the concentrated solution should be at least 80% by weight and is preferably at least 90% by weight. A concentration of 80% by weight of more noticeably reduces the adhesiveness and stickiness of the concentrated solution, which thus keeps clean the wall surface and which is attributable to the possibility of maintaining a high rate of removal of solvent from the tank wall.

As is clear from the Referential Example given hereafter, this effect is particularly marked when the concentration is at least 80% by weight, particularly at least 90% by weight.

This effect is characteristic of EP copolymers. Thus, in the case of solutions of rubbers other than EP copolymers (such as polyisoprene solutions), particles having a diameter of 10—20 mm adhere to the walls, even if they are mechanically scraped, so that this particular advantage of the invention is not exhibited so markedly as in the case of EP copolymers.

Referring to Figure 2, a solution which has been heated under elevated pressure in a heater is flashed at flashing hole A to deposit a polymer. Together with the solvent vapour, the polymer moves through flashed product duct B and is fed into flashing tank C, whence a concentrated polymer solution is discharged through polymer outlet D and solvent vapour is separated and discharged through vapour

3

outlet F. The skin temperatures of the flashed product duct B and the flashing tank C are maintained by, for example, providing heating jackets on their outsides.

In one embodiment of the invention, the flashed product duct B is inserted horizontally through a side wall of the flashing tank C into the interior of the flashing tank and is then bent to point vertically downwards almost directly above the polymer outlet D; the polymer and solvent vapour thus flow downwards from the downstream end E of the flashed product duct B towards the polymer outlet D.

The radius of curvature of the part of the duct which bends from a horizontal to a vertical direction is preferably from 1/8 to 6/8, more preferably from 3/8 to 4/8, of the inner diameter of the flashing tank, measured at the part of the tank where the flashed product duct B turns.

Furthermore, the length of the straight part of the pipe after it is turned to the vertical direction is preferably from 1 to 3, more preferably 2, times as long as the inner diameter of the flashed product duct B. The inner diameter of the flashed product B is preferably such that the velocity of the solvent vapour becomes from 0.5 to 6 m/sec and more preferably falls within the range from not below 0.5 m/sec but below 1 m/sec. By using a flashed product duct having this shape, the polymer and solvent vapour after flashing move through the duct as a mixed phase flow without adhesion or sticking to the inner walls of the duct and then flow down towards the polymer outlet D of the flashing tank.

If the radius of curvature of the duct B where it turns from the horizontal to the vertical direction is less than the range suggested above, stagnation can take place in the flow at the part where the duct turns. On the other hand, if it is greater than the range suggested above, the volume of the flashing tank becomes unnecessarily large, which is uneconomical, both for production and construction of the apparatus and the cost of its operation.

If the inner diameter of the flashed product duct B is too low to give the aforementioned solvent vapour velocity, the apparatus becomes too large and the amount of material treated per unit time becomes to small. On the other hand, if the inner diameter of the duct B is too great to give a solvent vapour velocity within the above-mentioned range, the solvent vapour flow dashes against the surface of the concentrated polymer solution in the lower part of the flashing tank and causes splashing of the polymer; in this case, it is necessary to provide a space to reduce the speed of impact between the lower end E of the flashed product duct and the liquid surface of the concentrated polymer solution in the flashing tank C, which is undesirable.

The distance between the lower end E of the flashed product duct and the liquid surface of the concentrated polymer solution in the bottom of the flashing tank C is preferably restricted to a value just sufficient to prevent the flashed product duct B from being immersed within the concentrated polymer solution, taking into account a certain definite variation in the height of the liquid surface, which is dependent upon the stabilities and responses to variations in the steps before and after the flashing tank C and the flashed product duct B.

When using a cyclone as the flashing tank, which is an alternative embodiment of the invention, the detailed shape of the flashed product duct can be seen from Figures 3 and 4.

In this embodiment, polymer solution is flashed at the flashing hole D under a pressure ranging from ambient pressure to 5 kg/cm$^2$ gauge. The solvent thus vapourizes to deposit and propel the polymer, and the solvent vapour and polymer move as a mixed phase in the flashed product duct. During this time, the polymer particles mutually agglomerate to increase their particle size and are fed into the cyclone, whilst being prevented from adhering or fixing onto the internal surfaces of the flashed product duct.

Feeding of the polymer particles into the cyclone in this state can be achieved satisfactorily by maintaining the skin temperature of the flashed product duct at the value mentioned above and, in addition, by appropriate design of its shape.

We prefer that the cross-sectional shape of the flashed product duct in this embodiment should be an ellipse, having a ratio of greater to lesser diameter of from 1:1 to 3:1. To maximize cyclone efficiency, it is preferred that the duct should be arranged so that its greater diameter coincides with the vertical direction. Figure 3 illustrates a case where the ratio of the greater to the lesser diameter is unity. The overall shape of the flashed product duct is such that its cross-sectional area increases from upstream to downstream (with respect to the flow of solvent vapour) to assist mutual agglomeration of the polymer particles. This enables the agglomerated polymer particles and solvent vapour to move smoothly without adhesion or fixing of the polymer particles to the inner surface of the flashed product duct.

We prefer to use an enlarged profile pipe as the flashed product duct. A preferred example of the shape of the flashed product duct is given in Table 6, hereafter, with reference to Figure 4 of the accompanying drawings.

Although this enlarged profile pipe may be of the eccentric or concentric type, the concentric type is more desirable, since it allows polymer particle agglomerates to move more smoothly. Figures 3 and 4 show examples of the concentric type of pipe.

The cross-sectional area of the flashed product duct at its downstream end is preferably such that the velocity of the solvent vapour is from 0.8 to 20 m/sec, more preferably from 3 to 10 m/sec. Since the flashed product duct has a smaller cross-sectional area at its upstream end, it may be much smaller than conventional spray-type driers.

By using a flashed product duct of the preferred shape described above, it is possible to stabilize the amounts of agglomerated polymer particles and solvent vapour fed to the cyclone per unit of time and to

# 0 059 106

obtain polymer particle agglomerates of a size comparable with the diameter of the end of the flashed product duct. If the duct has a shape other than the preferred shape described above, during operation there may be experienced a phenomenon resembling surging in blowers, namely a temporary cessation of movement of the polymer particle agglomerates followed by a sudden excessive increase in its speed of movement; this may, depending upon the scale of the apparatus, be accompanied by vibration. Moreover, it is possible for the polymer to be fed into the cyclone before its particle size has increased sufficiently. If fine polymer powder is formed for any reason, some portion of this fine powder can, depending upon the ability of the cyclone, enter the duct for discharging solvent vapour, which is undesirable.

It is possible to provide a scraping device for accelerating the downwards flow of concentrated polymer solution to the bottom of the tank along the inner wall of the flashing tank (whether or not it is a cyclone), but this is not always necessary.

Also, although it is not particularly necessary to provide a mechanically forced discharge device at the outlet for the concentrated polymer solution, provision of apparatus for breaking or preventing the formation of bridges of polymer may sometimes be effective, depending upon the size and shape of the discharge hole for the concentrated solution. This applies whether or not the flashing tank is a cyclone.

Also, if desired, the concentrated polymer solution discharged from the flashing tank (whether or not it is a cyclone) may be sent to a vent-type extruder or a kneading-type drier, in order to remove residual solvent. In this case, it may be desirable to control the flow of solution to the next step, for example to the vent-type extruder. This may be achieved, for example, by controlling the amount of solution received into the vent-type extruder, by controlling the amount of hot solution under pressure to be flashed or by controlling the amount of concentrated solution fed from the flashing tank by, for example, providing a rating roller.

The enlarged profile pipe used as a flashed product duct when a cyclone is employed as the flashing tank may also be used in combination with a conventional flashing tank. However, its combination with a cyclone is more preferred in that entrainment of polymer partcles in the solvent vapour to be discharged can be prevented and thus polymer and solvent can be separated more satisfactorily. Furthermore, the velocity of the solvent vapour at the tip of the flashed product duct can be increased and the polymer can be discharged from the cyclone more stably and smoothly.

The invention is further illustrated with reference to the following Referential Example, Examples and Comparative Examples.

Referential Example

Into a tank having the specification given below and equipped with a heating jacket were introduced 12.8 litres of a hexane solution of an EP copolymer, the copolymer consisting of 64% by weight of ethylene units, 32% by weight of propylene units and 4% by weight of dicyclopentadiene units. The pressure was maintained at 400±100 mm Hg gauge (0.53±0.13 bar), the solution was agitated at 20 r.p.m and the tank was heated so that its skin temperature was maintained at 195±5°C; during this time, hexane continuously vapourized from the tank, whilst an amount of hexane corresponding to the amount vapourized was continuously fed into the tank and mixed with the EP copolymer solution in order to keep the concentration of the solution constant. This experiment was carried out at various solution concentrations and the relationship between the solution concentration and the amount of vapourized hexane is shown in Figure 1 of the accompanying drawings.

When the concentration of the EP copolymer solution was 80% by weight or more, particularly 90% by weight or more, sticking and adhesion forces rapidly decreased and, as a result, the rate of vapourization of the solvent rapidly increased, as is apparent from Figure 1.

Specification of tank

| | |
|---|---|
| Total capacity: | 14 litres |
| Heat transfer area of jacket: | 0.36 m² |
| Stirrer: | paddle type wing (3 wings, clearance 1.0—1.5 mm) |
| Material: | SUS-316 (inner wall of tank/paddle). |

Example 1

The flashing tank (material: SUS-304) was equipped with a heating jacket and composed of an upper cylindrical part and a lower conical part. The cylindrical part had an internal diameter of 445 mm and a height of 650 mm. The conical part had a height of 400 mm and a bottom diameter of 130 mm. A 7% by weight hexane solution of the same EP copolymer as was used in the Referential Example was separated under the following conditions:

Conditions

| | |
|---|---|
| Amount of EP copolymer solution fed: | 240 litres/hour |
| Temperature and pressure of solution before flashing: | 218°C; 28 kg/cm²G |
| Temperature of inner wall of flashing tank (skin temperature): | 200°C |
| Temperature and pressure in flashing tank: | 130°C; 1.0 kg/cm²G |
| Concentration and temperature of concentrated EP copolymer solution at outlet of flashing tank: | 95% by weight; 165°C |

Adhesion of the concentrated EP copolymer solution to the inner wall of the tank was slight and its stability and smoothness of flow from the lower part of the tank were also good.

Examples 2—6 and Comparative Examples 1—3

Separation of solvent was carried out under the conditions shown in Table 1 with the same flashing tank, EP copolymer solution and feed of solution as in Example 1. The results are shown in Table 1.

TABLE 1

| | Comparative Example 1 | Comparative Example 2 | Comparative Example 3 | Example 2 | Example 3 | Example 4 | Example 5 | Example 6 |
|---|---|---|---|---|---|---|---|---|
| EP copolymer content of EP copolymer solution at outlet of flashing tank (% by wt.) | 46 | 92 | 91 | 93 | 92 | 95 | 95 | 93 |
| Skin temperature of flashing tank (°C) | 70 | 80 | 130 | 140 | 150 | 180 | 180 | 240 |
| Inner pressure of flashing tank (kg/cm²G) | 0 | 0 | 1.2 | 1.2 | 1.2 | 0 | 1.2 | 1.2 |
| Extent of adhesion of EP copolymer to the skin of flashing tank | Great | Great | Great | Small | Small | Very small | Very small | Very small |
| Stability and smoothness in flow-down of EP copolymer from flashing tank | Good | Bad | Bad | Good | Good | Good | Very good | Very good |

Example 7

An EP copolymer solution having the composition described in the Referential Example was separated using a flashing tank and a flashed product duct having the following specifications and under the following conditions:

Flashing tank equipped with jacket

As described in Example 1, provided with a solvent vapour discharge pipe at the center of the cylindrical part.

Flashed product duct equipped with jacket

A horizontal pipe piercing the side wall of the cylindrical part of the flashing tank 135 mm above the border between the conical and cylindrical parts and bent vertically downwards with a radius of curvature as shown in Table 2. It is provided with a heating jacket and the distance between the tip of the flashed product duct and the bottom of the flashing tank is 300 mm.

Conditions

| | |
|---|---|
| Amount of polymer solution fed: | 240 litres/hour |
| Temperature and pressure of solution before flashing: | 218°C; 28 kg/cm$^2$G |
| Temperature and pressure in flashing tank: | 130°C; 1.0 kg/cm$^2$G |
| Temperature of inner wall surface of flashing tank: | 200°C |
| Temperature of inner wall surface of flashed product duct: | shown in Table 2 |
| Vapour speed at the tip of flashed product duct: | shown in Table 2 |
| Concentration of solvent in the polymer solution fed: | 93% by weight |
| Concentration of solvent in the polymer solution recovered from flashing tank: | 5% by weight |

The results are shown in Table 2.

TABLE 2

| | Vapour speed at the tip of flashed product duct (m/sec) | Temperature of inner wall surface of flashed product duct (°C) | Radius of curvature with which flashed product duct is bent in flashing tank | | Result (Stability and smoothness in flow-down of polymer from flashed product duct) |
|---|---|---|---|---|---|
| Example 7-1 | 0.4 | 140 | (Inner diameter of the flashing tank) | ×3/8 | Somewhat bad |
| „    7-2 | 0.5 | 140 | „ | ×3/8 | Somewhat good |
| „    7-3 | 0.5 | 180 | „ | ×6/8 | Good |
| „    7-4 | 0.8 | 140 | „ | ×3/8 | Good |
| „    7-5 | 0.8 | 180 | „ | ×1/8 | Good |
| „    7-6 | 2 | 180 | „ | ×3/8 | Good* |
| „    7-7 | 6 | 180 | „ | ×3/8 | Good* |
| „    7-8 | 10 | 180 | „ | ×3/8 | Good** |

Notes

    * A dash of solvent vapour against the surface of the polymer solution in the flashing tank was observed.

    ** There was an undesirable danger than solvent vapour may dash against the surface of the polymer solution in the flashing tank and splash the polymer solution.

Example 8

In this Example, the polymer solution was a solution in hexane of a binary copolymer comprising 25% by weight of styrene units and 75% by weight of butadiene units. The flashing tank was the same as described in Example 7 and the flashed product duct was as described in Example 7-4. The conditions under which the experiment was carried out were as follows:

| | |
|---|---|
| Amount of polymer solution fed: | 240 litres/hour |
| Temperature and pressure of the solution before flashing: | 218°C; 28 kg/cm²G |
| Temperature and pressure in flashing tank: | 130°C; 1.0 kg/cm²G |
| Temperature of inner wall surface of flashing tank: | 200°C |
| Temperature of inner wall surface of flashed product duct: | shown in Table 3 |
| Vapour speed at the tip of flashed product duct: | shown in Table 3 |
| Concentration of solvent in the polymer solution fed: | 93% by weight |
| Concentration of solvent in the polymer solution recovered from flashing tank: | 5% by weight |

The results are shown in Table 3.

TABLE 3

| | Vapour speed at the tip of flashed product duct (m/sec) | Temperature of inner wall surface of flashed product duct (°C) | Result (Stability and smoothness in the flow-down of polymer from flashed product duct) | Dashing of solvent vapour against the surface of polymer solution in flashing tank |
|---|---|---|---|---|
| Example 8-1 | 0.4 | 140 | Somewhat good | Not observed |
| „ 8-2 | 0.5 | 140 | Somewhat good | Not observed |
| „ 8-3 | 0.5 | 180 | Good | Not observed |
| „ 8-4 | 0.8 | 140 | Good | Not observed |
| „ 8-5 | 0.8 | 180 | Good | Not observed |
| „ 8-6 | 2 | 180 | Good | Observed |
| „ 8-7 | 6 | 180 | Good | Observed |
| „ 8-8 | 10 | 180 | Good | Violent |

Example 9

In this experiment, a solution of EP copolymer in hexane, as described in Example 1, was concentrated using a cyclone and an enlarged profile pipe, both equipped with heating jackets. The specifications and conditions were as follows:

Cyclone and enlarged profile pipe

The dimensions and construction of the cyclone were as described for the flashing tank in Example 1 and the cyclone had a heating jacket over the whole of its outer surface. The cyclone had a discharge pipe for solvent vapour, the pipe having an inner diameter of 50 mm and extending vertically for a length of 440 mm into the cyclone from the centre of the lid covering the upper cylindrical part of the cyclone.

The enlarged profile pipe was as shown in Table 4 and was attached to the highest part of the side wall of the upper cylindrical part of the cyclone, in a direction tangential to the circumference of the side wall.

Conditions

| | |
|---|---|
| Amount of polymer solution fed: | 240 litres/hour |
| Temperature and pressure of solution before flashing: | 218°C; 28 kg/cm$^2$G |
| Temperature of inner wall surfaces of cyclone and enlarged profile pipe when heating with jacket: | 200°C |
| Temperature and pressure in cyclone: | 130°C; 1.0 kg/cm$^2$G |
| Shape of flashed product duct: | shown in Table 4 |
| Vapour speed at the tip of flashed product duct: | 10 m/sec |
| Concentration of solvent in the polymer solution fed: | 93% by weight |
| Concentration of solvent in the polymer solution recovered from cyclone: | 5% by weight |

The results of the experiment are shown in Table 4.

Example 10 and Comparative Example 5

In these Examples, the solution used was of a styrene-butadiene copolymer rubber as described in Example 8 and the cyclone and enlarged profile pipe were as described in Example 9. The other conditions were as follows:

Conditions of experiment

| | |
|---|---|
| Amount of polymer solution fed: | 240 litres/hour |
| Temperature and pressure of solution before flashing: | 218°C; 28 kg/cm$^2$G |
| Temperature of inner wall surfaces of cyclone and enlarged profile pipe when heating with jacket: | 200°C |
| Temperature and pressure in cyclone: | 130°C; 1.0 kg/cm$^2$G |
| Shape of flashed product duct: | shown in Table 5 |
| Vapour speed at the tip of flashed product duct: | 10 m/sec |
| Concentration of solvent in the polymer solution fed: | 93% by weight |
| Concentration of solvent in the polymer solution recovered from cyclone: | 5% by weight |

The results are shown in Table 5.

TABLE 4
Example 9 and Comparative Example 4

| | Dimensions, etc. of flashed product duct used | | | | | Result |
| --- | --- | --- | --- | --- | --- | --- |
| | Dimension mentioned in Fig. 4 | | | | Jacket heating at 200°C | Smoothness in the flow-out of flashed product |
| | $L/R_{2-L}$ | $R_{2-L}/R_{1-L}$ | $R_{2-L}/R_{2-s}$ | $R_{1-L}/R_{1-s}$ | | |
| Example 9-1 | 2.4 | 1.5 | 1.0 | 1.0 | Practised | Good |
| Example 9-2 | 2.4 | 1.5 | 2 | 2 | Practised | Good |
| Comparative Example 4-1 | 2.4 | 1.5 | 1.0 | 1.0 | Not practised | Bad |
| Comparative Example 4-2 | 2.4 | 0.9 | 1.0 | 1.0 | Practised | Bad |
| Example 9-3 | 2.4 | 2.2 | 1.0 | 1.0 | Practised | Somewhat good |
| Example 9-4 | 1.4 | 1.5 | 1.0 | 1.0 | Practised | Somewhat good |
| Example 9-5 | 4 | 1.5 | 1.0 | 1.0 | Practised | Good |

13

## 0 059 106

### TABLE 5
#### Example 10 and Comparative Example 5

| | Dimensions, etc. of flashed product duct used | | | | | Result |
|---|---|---|---|---|---|---|
| | Dimension mentioned in Fig. 4 | | | | Jacket heating at 200°C | Smoothness in the flow-out of flashed product |
| | $L/R_{2-L}$ | $R_{2-L}/R_{1-L}$ | $R_{2-L}/R_{2-s}$ | $R_{1-L}/R_{1-s}$ | | |
| Example 10-1 | 2.4 | 1.5 | 1.0 | 1.0 | Practised | Good |
| Example 10-2 | 2.4 | 1.5 | 2 | 2 | Practised | Good |
| Comparative Example 5-1 | 2.4 | 1.5 | 1.0 | 1.0 | Not practised | Bad |
| Comparative Example 5-2 | 2.4 | 0.9 | 1.0 | 1.0 | Practised | Bad |
| Example 10-3 | 2.4 | 2.2 | 1.0 | 1.0 | Practised | Somewhat good |
| Example 10-4 | 1.4 | 1.5 | 1.0 | 1.0 | Practised | Somewhat good |
| Example 10-5 | 4 | 1.5 | 1.0 | 1.0 | Practised | Good |

### TABLE 6

| Dimensions in Fig. 4 | Dimensions in the preferable shape of enlarged profile pipe |
|---|---|
| $R_{1-L}/R_{1-s}$ | 1 to 3 |
| $R_{2-L}/R_{2-s}$ | 1 to 3 |
| $L/R_{2-L}$ | 1.5 to 4 |
| $R_{2-L}/R_{1-L}$ | 1.2 to 2 |

**Claims**

1. A process for concentrating a polymer solution by flashing a polymer solution, characterized in that said polymer solution is heated under an elevated pressure sufficient to maintain said solution in a liquid state and is sent into a flashing tank kept at an inner surface temperature of at least 140°C and a pressure ranging from atmospheric pressure to 5 kg/cm$^2$G, and said solution is flashed to evaporate and separate the solvent, thereby concentrating said solution, so that the concentration of the polymer in said solution becomes at least 80% by weight, the concentrated solution being recovered from the bottom part of the flashing tank.

2. A process according to Claim 1, wherein the temperature of the inner surface of the tank is at least 180°C.

3. A process according to Claim 1 or Claim 2, wherein the concentration of polymer in the concentrated solution is at least 90% by weight.

4. A process according to Claim 1, wherein the polymer and solvent vapour after flashing are fed into the flashing tank via a flashed product duct whose inner surface is maintained at a temperature of at least 140°C.

14

**0 059 106**

5. A process according to Claim 4, wherein the temperature of the inner surface of the flashed product duct is at least 180°C.

6. A process according to Claim 4, wherein said flashed product duct is inserted into the flashing tank through the side wall of the flashing tank and is bent towards the bottom of the flashing tank with a radius of curvature.

7. A process according to Claim 6, wherein said radius of curvature with which the flashed product duct is bent in the flashing tank is in the range of from 1/8 to 6/8 based on the inner diameter of the flashing tank.

8. A process according to Claim 4, wherein the velocity of solvent vapour at the tip of the flashed product duct is in the range of from 0.5 m/sec to 6 m/sec.

9. A process according to Claim 4, wherein the velocity of solvent vapour at the tip of the flashed product duct is not smaller than 0.5 m/sec and smaller than 1 m/sec.

10. A process according to Claim 1, wherein an enlarged profile pipe of which the inner surface temperature is maintained at 140°C or above is used as a flashed product duct for supplying the polymer and solvent vapour after flashing into the flashing tank.

11. A process according to Claim 10, wherein a cyclone of which the inner surface temperature is maintained at 140°C or above is used as said flashing tank.

12. A process according to Claim 10 or Claim 11, wherein said inner surface temperature is 180°C or above.

13. A process according to Claim 11, wherein the pressure in the cyclone is maintained in the range from atmospheric pressure to 5 kg/cm² gauge.

14. A process according to Claim 10, wherein said enlarged profile pipe is so shaped that its transverse section has ths shape of ellipse of which the ratio of the greater to the lesser diameter is from 1:1 to 3:1, and the ratio between the length of the pipe and the greater diameter of the transverse section at the downstream end of the fluid in the pipe is from 1.5:1 to 4:1 or the ratio of the greater diameter of the transverse section at the downstream end of the fluid in the pipe to the greater diameter of the transverse section at the upstream end of the fluid in the pipe is from 1.2:1 to 2:1.

15. A process according to any one of the preceding Claims wherein the polymer in said polymer solution is an ethylene-α-olefin binary copolymer or an ethylene-α-olefin-nonconjugated polyene ternary copolymer.


**Patentansprüche**

1. Verfahren zum Einengen einer Polymerlösung durch Schnellverdampfung einer Polymerlösung, dadurch gekennzeichnet, daß die Polymerlösung unter einem erhöhten Druck, der ausreicht, um die Lösung in flüssigem Zustand zu halten, erhitzt und in einen Schnellverdampfungsbehälter gebracht wird, der auf einer inneren Oberflächentemperatur von mindestens 140°C und einem Druck im Bereich vom Atmosphärendruck bis 5 kg/cm² G gehalten wird, und die Lösung zum Abdampfen und Abtrennen des Lösungsmittels schnell verdampft wird, wobei die Lösung eingeengt wird, so daß die Konzentration des Polymeren in der Lösung mindestens 80 Gewichtsprozent wird, wobei die eingeengte Lösung aus dem unteren Teil des Schnellverdampfungsbehälters gewonnen wird.

2. Verfahren nach Anspruch 1, wobei die Temperatur der inneren Oberfläche des Behälters mindestens 180°C beträgt.

3. Verfahren nach Anspruch 1 oder Anspruch 2, wobei die Konzentration des Polymeren in der eingeengten Lösung mindestens 90 Gewichtsprozent beträgt.

4. Verfahren nach Anspruch 1, wobei das Polymer und die Lösungsmitteldämpfe nach dem Schnellverdampfen durch eine Leitung für das schnellverdampfte Produkt, deren innere Oberfläche auf einer Temperatur von mindestens 140°C gehalten wird, in den Schnellverdampfungsbehälter eingespeist werden.

5. Verfahren nach Anspruch 4, wobei die Temperatur der inneren Oberfläche der Leitung für das schnellverdampfte Produkt mindestens 180°C beträgt.

6. Verfahren nach Anspruch 4, wobei die Leitung für das schnellverdampfte Produkt in den Schnellverdampfungsbehälter durch die Seitenwand des Schnellverdampfungsbehälters eingefügt und in Richtung auf den Boden des Schnellverdampfungsbehälters in einem Kurvenradius gebogen ist.

7. Verfahren nach Anspruch 6, wobei der Kurvenradius, in dem die Leitung für das schnellverdampfte Produkt in dem Schnellverdampfungsbehälter gebogen ist, im Bereich von 1/8 bis 6/8, bezogen auf den Innendurchmesser des Schnellverdampfungsbehälters, liegt.

8. Verfahren nach Anspruch 4, wobei die Geschwindigkeit des Lösungsmitteldampfes am Ende der Leitung für das schnellverdampfte Produkt im Bereich von 0,5 bis 6 m/s liegt.

9. Verfahren nach Anspruch 4, wobei die Geschwindigkeit des Lösungsmitteldampfes am Ende der Leitung für das schnellverdampfte Produkt nicht kleiner als 0,5 m/s und kleiner als 1 m/s ist.

10. Verfahren nach Anspruch 1, wobei ein Rohr mit vergrößertem Profil, dessen innere Oberflächentemperatur auf 140°C oder darüber gehalten wird, als Leitung für das schnellverdampfte Produkt zur Zuführung des Polymeren und des Lösungsmitteldampfes nach dem Schnellverdampfen in den Schnellverdampfungsbehälter benutzt wird.

15

11. Verfahren nach Anspruch 10, wobei ein Cyclon, dessen innere Oberflächentemperatur auf 140°C oder darüber gehalten wird, als Schnellverdampfungsbehälter verwendet wird.

12. Verfahren nach Anspruch 10 oder Anspruch 11, wobei die innere Oberflächentemperatur 180°C oder höher ist.

13. Verfahren nach Anspruch 11, wobei der Druck in dem Cyclon im Bereich vom Atmosphärendruck bis 5 kg/cm² Überdruck gehalten wird.

14. Verfahren nach Anspruch 10, wobei das Rohr mit vergrößerten Profilen derart geformt ist, daß sein Querschnitt die Form einer Ellipse aufweist, in der das Verhältnis vom größeren zum kleineren Durchmesser 1:1 bis 3:1 beträgt, und das Verhältnis zwischen der Länge des Rohrs und dem größeren Durchmesser des Querschnitts am stromabwärts gelegenen Ende der Strömung in dem Rohr 1,5:1 bis 4:1 oder das Verhältnis des größeren Durchmessers des Querschnitts am stromabwärts gelegenen Ende der Strömung in dem Rohr zum größeren Durchmesser des Querschnitts am stromaufwärts gelegenen Ende der Strömung in dem Rohr 1,2:1 bis 2:1 beträgt.

15. Verfahren nach einem der vorangehenden Ansprüche, wobei das Polymer in der Polymerlösung ein binäres Äthylen-α-Olefin-Copolymerisat oder ein ternäres Copolymerisat aus Äthylen, α-Olefin und nicht konjugiertem Polyin ist.

## Revendications

1. Procédé de concentration d'une solution de polymère par détente rapide d'une solution de polymère, caractérisé en ce que ladite solution de polymère est chauffée sous une pression élevée suffisante pour maintenir ladite solution à l'état liquide et est envoyée dans une cuve de détente rapide maintenue à une température de la surface interne d'au moins 140°C et à une pression comprise entre la pression atmosphérique et 5 kg/cm² G (pression manométrique), et ladite solution est détendue rapidement pour évaporer et séparer le solvant, ce qui concentre ladite solution, de sorte que la concentration en polymère de ladite solution atteint au moins 80% en poids, la solution concentrée étant récupérée depuis la partie inférieure de la cuve de détente.

2. Procédé selon la revendication 1, dans lequel la température de la surface interne de la cuve est d'au moins 180°C.

3. Procédé selon la revendication 1 ou la revendication 2, dans lequel la concentration en polymère de la solution concentrée est d'au moins 90% en poids.

4. Procédé selon la revendication 1, dans lequel le polymère et les vapeurs de solvant après détente sont introduits dans la cuve de détente par un conduit de produit détendu dont la surface interne est maintenue à une température d'au moins 140°C.

5. Procédé selon la revendication 4, dans lequel la température de la surface interne du conduit de produit détendu est d'au moins 180°C.

6. Procédé selon la revendication 4, dans lequel ledit conduit de produit détendu s'insère dans la cuve de détente à travers la paroi latérale de la cuve de détente et est courbé vers le fond de la cuve de détente avec un rayon de courbure.

7. Procédé selon la revendication 6, dans lequel ledit rayon de courbure selon lequel le conduit de produit détendu est courbé dans la cuve de détente est compris entre 1/8- et 6/8- du diamètre interne de la cuve de détente.

8. Procédé selon la revendication 4, dans lequel la vitesse des vapeurs de solvant à l'extrémité du conduit de produit détendu est comprise entre 0,5 m/s et 6 m/s.

9. Procédé selon la revendication 4, dans lequel la vitesse des vapeurs de solvant à l'extrémité du conduit de produit détendu n'est pas inférieure à 0,5 m/s et est inférieure à 1 m/s.

10. Procédé selon la revendication 1, dans lequel une canalisation de profil évasé dont la température de la surface interne est maintenue à 140°C ou plus est utilisée comme conduit de produit détendu pour amener le polymère et les vapeurs de solvant après détente dans la cuve de détente.

11. Procédé selon la revendication 10, dans lequel on utilise comme cuve de détente un cyclone dont la température de la surface interne est maintenue à 140°C ou plus.

12. Procédé selon la revendication 10 ou la revendication 11, dans lequel ladite température de la surface interne est de 100°C ou plus.

13. Procédé selon la revendication 11, dans lequel la pression dans le cyclone est maintenue entre la pression atmosphérique et 5 kg/cm² G.

14. Procédé selon la revendication 10, dans lequel la canalisation de profil évasé est conformée de sorte que sa section transversale ait la forme d'une ellipse dont le rapport du grand au petit diamètre est de 1:1 à 3:1, et le rapport entre la longueur de la canalisation et le grand diamètre de la section transversale à l'extrémité aval du fluide dans la canalisation est de 1,5:1 à 4:1, ou bien le rapport du grand diamètre de la section transversale à l'extrémité aval du fluide dans la canalisation au grand diamètre de la section transversale à l'extrémité amont du fluide dans la canalisation est de 1,2:1 à 2:1.

15. Procédé selon l'une quelconque des revendications précédentes, dans lequel le polymère dans ladite solution de polymère est un copolymère binaire éthylène/α-oléfine ou un copolymère ternaire éthylène/α-oléfine/polyène non conjugué.

# F I G. I

(Kg/H)

VAPORIZABILITY OF HEXANE

CONCENTRATION OF
EP COPOLYMER

(wt%)

1

# F I G. 2

# FIG.3

# FIG. 4

FLOW →

$R_1(R_{1-L}, R_{1-s})$

$R_2(R_{2-L}, R_{2-s})$

L